# EUROPÄISCHE PATENTSCHRIFT

(11) **EP 0 913 679 B1**
(45) Veröffentlichungstag und Bekanntmachung des Hinweises auf die Patenterteilung: **08.08.2001**
(21) Anmeldenummer: 98113306.9
(22) Anmeldetag: 16.07.1998
(51) Int. Cl.: G01M 3/00

(54) **Verfahren zur nachträglichen Prüfung existierender Druckbehälter**
Method for subsequent examination of existing pressure vessels
Procédé pour examination ultérieure des récipients sous pression existants

(30) Priorität: 29.10.1997 DE 19747744
(43) Veröffentlichungstag der Anmeldung: 06.05.1999
(73) Patentinhaber: HYDAC TECHNOLOGY GMBH, D-66280 Sulzbach (DE)
(72) Erfinder: Kany, Helmfried, 66271 Kleinblittersdorf (DE)
(74) Vertreter: Patentanwälte Bartels und Partner

(56) Entgegenhaltungen:
- DE-A- 3 422 150
- US-A- 4 102 110
- US-A- 5 485 964

## Beschreibung

Die Erfindung bezieht sich auf ein Verfahren zur nachträglichen Prüfung existierender Druckbehälter auf die Erfüllung festgelegter Sicherheitskriterien, beispielsweise einer amtlichen Druckbehälterverordnung.

Druckbehälter für hydraulische oder hydropneumatische Anwendungen werden in allen Verbänden der Deutschen Bundeswehr in großem Umfang für waffentechnische oder fahrzeugtechnische Einsatzzwecke benutzt. Der Betrieb der Druckbehälter, beispielsweise in Form von Hydrospeichern, insbesondere Kolbenspeichern, war von der amtlichen Druckbehälterverordnung zunächst ausgenommen. Die Bundeswehr hat sich jedoch nunmehr dieser Druckbehälterverordnung unterworfen.

In Anbetracht der teilweise langen Betriebszeiten von Fahrzeug- und Waffensystemen ergibt sich die Situation, daß bei ein und demselben System durch Nachbeschaffungen Druckbehälter gleicher Funktion vorhanden sind, die sich durch unterschiedliche Hersteller, unterschiedliche Materialien und unterschiedliche Konstruktionsstände auszeichnen, wobei prüffähige oder vorgeprüfte Unterlagen meist nicht vorliegen.

Der Erfindung liegt die Aufgabe zugrunde, ein Verfahren anzugeben, das eine zügige und kostengünstige nachträgliche Prüfung auf die Erfüllung der Kriterien der Druckbehälterverordnung ermöglicht.

Erfindungsgemäß ist dieses Aufgabe durch ein Verfahren der eingangs genannten Art gelöst, das folgende Verfahrensschritte aufweist:
a) Einteilen der gesammelten, zu prüfenden Druckbehälter in Hauptgruppen mit Druckbehältern mit nach optischen Kriterien je gleichem Aussehen,
b) Demontieren der optisch gleichen Druckbehälter der Hauptgruppen und Absondern der drucktragenden Teile,
c) Einteilen der drucktragenden Teile in Gruppen mit jeweils funktionsgleichen drucktragenden Teilen,
d) Prüfen der drucktragenden Teile der Gruppen auf ihre Werkstoffart und Unterteilen der Teile in Untergruppen mit je werkstoffgleichen drucktragenden Teilen und
e) Volluntersuchen zumindest je eines drucktragenden Teiles jeder Untergruppe auf die Erfüllung der Kriterien gemäß der anzuwendenden Spezifikationen.

Aufgrund der Verfahrensschritte a) bis d) wird erreicht, daß jede der gebildeten Untergruppen ausschließlich Bauteile enthält, die nicht nur optisch gleichartig und funktionsgleich sind, sondern ausnahmslos auch werkstoffgleich sind, so daß eine durch einen unabhängigen Sachverständigen durchgeführte Volluntersuchung eines einzigen drucktragenden Teiles dafür kennzeichnend ist, ob die gesamte Untergruppe die Kriterien der Druckbehälterverordnung erfüllt oder nicht.

Bei einem vorteilhaften Ausführungsbeispiel des Verfahrens werden die Untergruppen nach Maßgabe des betreffenden, die Volluntersuchung durchführenden unabhängigen Sachverständigen in Lose bestimmter Größe unterteilt, und jeweils ein drucktragendes Teil jedes Loses wird der Volluntersuchung unterzogen.

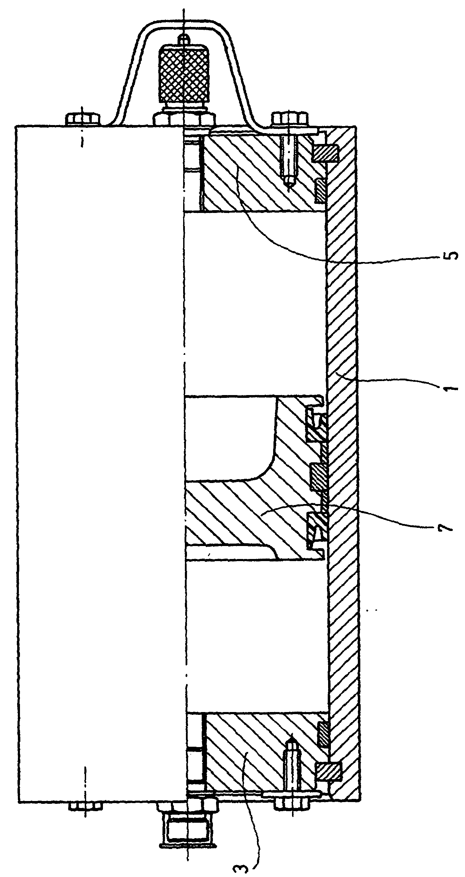

Nachstehend ist die Erfindung im einzelnen erläutert. Die einzige Figur zeigt einen Druckbehälter in Form eines Kolbenspeichers, der teilweise im Längsschnitt dargestellt ist.

Bei der Durchführung des Verfahrens werden die zu prüfenden Druckbehälter beispielsweise eines bestimmten Waffensystems gesammelt. Nachdem erforderlichenfalls eine Reinigung durchgeführt wurde, werden, die Druckbehälter von dem teilweise dicken, militärischen Anstrich befreit, der alle möglicherweise vorhandenen Kennzeichnungen überdeckt, so daß die Druckbehälter nach optischen Kriterien in Druckbehälter gleichen Aussehens getrennt werden können, wobei beispielsweise sämtliche Kolbenspeicher des in der Figur gezeigten Typs zu einer Hauptgruppe vereinigt werden, die also beim betrachteten Ausführungsbeispiel ausschließlich aus Kolbenspeichern der in der Zeichnung dargestellten Art besteht.

Jeder der Kolbenspeicher dieser Hauptgruppe wird nun demontiert. Die dabei anfallenden drucktragenden Teile, nämlich beim vorliegenden Beispiel der Zylinder 1, der ölseitige Deckel 3, der gasseitige Deckel 5 und der Kolben 7, werden nunmehr weiter unterteilt, und zwar zur Bildung von Gruppen mit jeweils funktionsgleichen drucktragenden Teilen, d.h. zur Bildung einer Gruppe nur mit Zylindern 1, einer Gruppe nur mit ölseitigen Deckeln 3, einer Gruppe nur mit gasseitigen Deckeln 5 und einer Gruppe nur mit Kolben 7.

Sodann werden die Teile der Gruppen auf Materialgleichheit untersucht. Betrachtet man beispielsweise die Gruppe mit den Kolben 7, dann wird bei diesem Schritt durch Härteprüfung und durch Spektralanalyse die Werkstoffart jedes Kolbens 7 ermittelt, und es werden jeweils werkstoffgleiche Kolben 7 wiederum in Untergruppen versammelt.

Bei dem betrachteten Beispiel liegen nun also Untergruppen vor, von denen jede lediglich Kolben 7 gleichen Werkstoffs enthält. Bei einer Volluntersuchung, die von einem unabhängigen Sachverständigen durchführbar ist, beispielsweise durch einen staatlich anerkannten Technischen Überwachungsverein, wird nun durch chemische Vollanalyse, Zugproben, Kerbschlagproben usw. festgestellt, ob die Kolben 7 der betreffenden Untergruppe die Kriterien der Druckbehälterverordnung erfüllen oder nicht. Wenn die Kriterien erfüllt sind, ist der Nachweis geführt, daß sämtliche Mitglieder der betreffenden Untergruppe aus Kolben 7 die Kriterien erfüllen, da jede Untergruppe aus werkstoffgleichen Bauteilen besteht.

Entsprechend läßt sich durch Volluntersuchen jeweils eines Teiles der übrigen Untergruppen, also beispielsweise der Untergruppen mit werkstoffgleichen Zylindern 1, der Untergruppen mit ölseitigen Deckeln 3, oder der Untergruppen mit den gasseitigen Deckeln 5, der Nachweis führen, ob sämtliche Teile der betreffenden Untergruppen, da sie werkstoffgleich sind, den Kriterien genügen oder nicht.

Bei einer Verfeinerung des Verfahrens kann so vorgegangen werden, daß nach Maßgabe des betreffenden, die Volluntersuchung durchführenden Sachverständigen die betreffenden Untergruppen in Teillose vorbestimmter Teile-Stückzahlen unterteilt werden und jeweils nur ein Bauteil jedes der Teillose der Volluntersuchung unterworfen wird.

## Patentansprüche

1. Verfahren zur nachträglichen Prüfung existierender Druckbehälter auf die Erfüllung festgelegter Sicherheitskriterien, beispielsweise einer amtlichen Druckbehälterverordnung, das die Verfahrensschritte aufweist:
a) Einteilen der gesammelten, zu prüfenden Druckbehälter in Hauptgruppen mit Druckbehältern mit nach optischen Kriterien je gleichem Aussehen,
b) Demontieren der optisch gleichen Druckbehälter der Hauptgruppen und Absondern der drucktragenden Teile,
c) Einteilen der drucktragenden Teile in Gruppen mit jeweils funktionsgleichen drucktragenden Teilen,
d) Prüfen der drucktragenden Teile der Gruppen auf ihre Werkstoffart und Unterteilen der Teile in Untergruppen mit je werkstoffgleichen drucktragenden Teilen und
e) Volluntersuchen zumindest je eines drucktragenden Teiles jeder Untergruppe auf die Erfüllung der Kriterien gemäß der anzuwendenden Spezifikationen.

2. Verfahren nach Anspruch 1, dadurch gekennzeichnet, daß die Untergruppen nach Maßgabe eines die Volluntersuchung durchführenden, unabhängigen Sachverständigen in Lose bestimmter Größe unterteilt werden und daß je ein drucktragendes Teil jedes Loses der Volluntersuchung unterzogen wird.

3. Verfahren nach Anspruch 1 oder 2, dadurch gekennzeichnet, daß die Druckbehälter vor Durchführen des Verfahrensschrittes a) gereinigt und erforderlichenfalls von Farbe befreit werden, um die Beurteilung nach optischen Kriterien zu erleichtern.

4. Verfahren nach einem der Ansprüche 1 bis 3, dadurch gekennzeichnet, daß gemäß Verfahrensschritt d) die Prüfung auf Werkstoffart durch Härteprüfung und Spektralanalyse durchgeführt wird.

5. Verfahren nach einem der Ansprüche 1 bis 4, dadurch gekennzeichnet, daß die Volluntersuchung des Verfahrensschrittes e) eine chemische Vollanalyse, Zugproben und Kerbschlagproben beinhaltet.

## Claims

1. A method of post-testing existing pressure vessels for compliance with specified safety requirements, such as official pressure vessel regulations, comprising the following stages:
a) Sorting the collected pressure vessels into main pressure vessel groups according to visual criteria and according to uniform appearance;
b) dismantling the visually similar pressure vessels in the main groups and sorting out the pressure-containing parts;
c) sorting the pressure-containing parts into groups of parts having the same pressure-bearing function;
d) testing the pressure-containing parts in the groups for the type of material and splitting them into sub-groups of parts from similar materials, and
e) fully investigating at least one pressure-containing part out of each sub-group for compliance with requirements in accordance with the applicable specification.

2. A method according to Claim 1, characterised by the fact that the sub-groups are further split into batches of specific size as indicated by an independent expert performing the full investigation.

3. A method according to Claim 1 or 2, characterised by the fact that the pressure vessels are cleaned and have paint removed from them, if necessary, before the Process Stage a), in order to facilitate visual assessment.

4. A method according to one of the Claims 1 to 3, characterised by the fact that the type of material is tested by hardness testing and spectral analysis in Stage d).

5. A method according to one of the Claims 1 to 4, characterised by the fact that full investigation in Stage e) comprises full chemical analysis. tensile testing and notch testing.

## Revendications

1. Procédé destiné à un contrôle ultérieur des réservoirs sous pression afin de déterminer si ceux-ci répondent aux exigences de sécurité définies, par exemple, par un règlement administratif sur les réservoirs sous pression, lequel procédé comprend les étapes suivantes :
a) répartition des réservoirs sous pression, rassemblés pour le contrôle, en groupes principaux qui contiennent chacun des réservoirs sous pression qui présentent tous le même aspect défini par des critères visuels,
b) démontage des réservoirs sous pression de même aspect visuel contenus dans les groupes principaux, afin d'en retirer les pièces supportant les efforts de pression,
c) répartition des pièces supportant les efforts de pression en groupes contenant chacun des pièces supportant les efforts de pression qui remplissent des fonctions identiques,
d) contrôle des pièces supportant les efforts de pression contenues dans ces groupes, pour déterminer le type de matériau de fabrication, puis subdivision des pièces en sous-groupes contenant chacun des pièces supportant les efforts de pression réalisées dans un même matériau et
e) contrôle intégral d'au moins une pièce supportant les efforts de pression prélevée dans chaque sous-groupe, pour déterminer si celle-ci répond aux exigences définies selon les spécifications à appliquer.

2. Procédé selon la revendication 1, caractérisé en ce que les sous-groupes sont subdivisés, selon des critères définis par l'expert indépendant chargé du contrôle intégral, en lots de grandeur déterminée et une seule pièce supportant les efforts de pression de chaque lot est soumise à un contrôle intégral.

3. Procédé selon la revendication 1 ou 2, caractérisé en ce que, avant la mise en oeuvre du procédé, les réservoirs sous pression sont a) nettoyés et, en cas de besoin, décapés pour éliminer la peinture, afin de faciliter le tri basé sur des critères visuels.

4. Procédé selon l'une quelconque des revendications 1 à 3, caractérisé en ce que, selon l'étape d), le contrôle destiné à déterminer le type de matériau de fabrication est exécuté sous forme de contrôle de dureté et d'analyse spectrale.

5. Procédé selon l'une quelconque des revendications 1 à 4, caractérisé en ce que le contrôle intégral de l'étape e) comporte une analyse chimique complète, des essais de traction et des essais de résilience sur éprouvettes entaillées.
